# FASCICULE DE BREVET EUROPEEN

(11) **EP 0 381 580 B1**
(45) Date de publication et mention de la délivrance du brevet: **27.10.1993**
(21) Numéro de dépôt: 90400257.3
(22) Date de dépôt: 30.01.1990
(51) Int. Cl.: H05G 1/10

(54) **Dispositif d'alimentation haute tension pour tube à rayons X**
Anordnung zur Hochspannungsversorgung einer Röntgenröhre
High-voltage power supply device for an X-ray tube

(30) Priorité: 02.02.1989 FR 8901357
(43) Date de publication de la demande: 08.08.1990
(73) Titulaire: GENERAL ELECTRIC CGR S.A., F-92130 Issy les Moulineaux (FR)
(72) Inventeur: Jedlitschka, Hans, F-75116 Paris (FR); Sireul, Jacques, F-75116 Paris (FR)
(74) Mandataire: Ballot, Paul Denis Jacques

(56) Documents cités:
- EP-A- 0 003 946
- DE-A- 3 125 240
- FR-A- 2 239 040
- FR-A- 2 445 087
- US-A- 3 510 748
- US-A- 3 541 424
- US-A- 4 338 657

## Description

L'invention concerne les dispositifs électriques qui sont utilisés pour alimenter les tubes à rayons X.

Un tube à rayons X comprend une cathode du type à filament qui émet un faisceau d'électrons en direction d'une anode ou anti-cathode. L'anode est constituée d'un matériau tel que le tungstène ou le molybdène qui émet des rayons X lorsqu'il est bombardé par le faisceau d'électrons provenant de la cathode. Pour obtenir une faisceau d'électrons de grande énergie, les électrons sont accélérés par un champ électrique intense créé entre la cathode et l'anode. A cet effet, l'anode est portée à un potentiel positif de plusieurs dizaines de kilovolts par rapport à la cathode, ce potentiel pouvant dépasser cent kilovolts et atteindre cent quarante kilovolts.

De telles tensions sont fournies par des dispositifs d'alimentation dits haute tension connus de US-A-3 510 748 et de US-A-3 541 424. Les dispositifs comprennent, comme le montre la figure 1, un transformateur 10 qui est connecté à des circuits redresseur-doubleur de tension 11. Plus précisément, le transformateur 10 comporte un seul enroulement primaire 12 auquel est appliquée une tension alternative et un circuit secondaire 13 qui est connecté aux circuits redresseur-doubleur de tension 11. Chaque circuit redresseur-doubleur de tension 11 consiste, de manière classique, en un enroulement secondaire 14, deux diodes D1 et D2 et deux condensateurs C1 et C2 qui sont connectés entre eux selon le schéma de la figure 1. Chaque circuit redresseur-doubleur de tension est connecté au suivant de manière que leurs tensions de sortie s'additionnent, ce qui permet d'obtenir une tension très élevée sur le dernier circuit doubleur du montage.

Dans un exemple de réalisation typique, chaque circuit redresseur-doubleur a une tension de sortie de six kilovolts de sorte qu'à la sortie du douzième circuit redresseur-doubleur, la tension est de soixante-douze kilovolts.

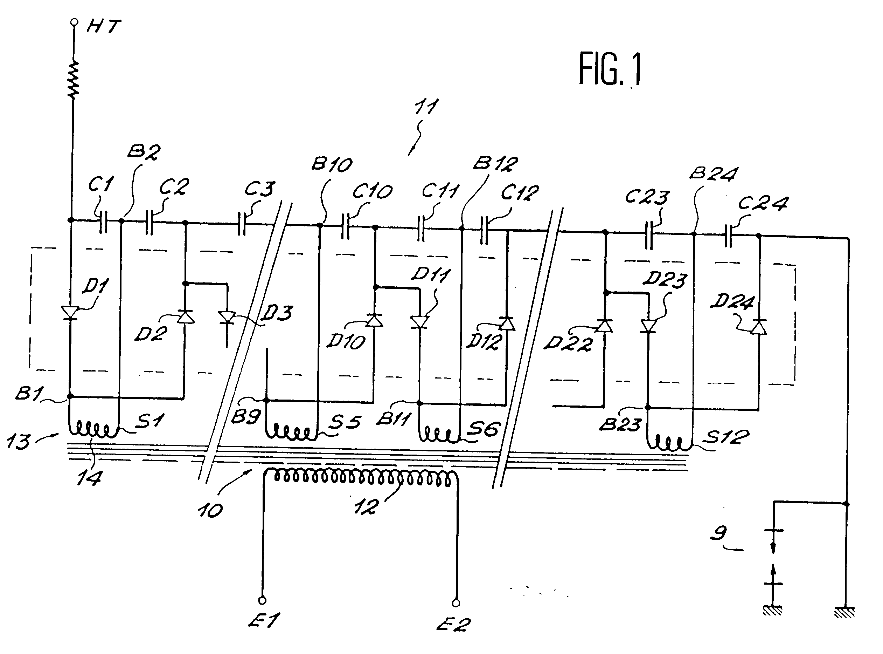

On remarquera que pour obtenir une différence de potentiels de l'ordre de 140 kilovolts entre la cathode et l'anode d'un tube à rayons X, il suffit de connecter la cathode à un potentiel négatif de 70 kilovolts par rapport à la masse et l'anode à un potentiel positif de 70 kilovolts par rapport à la masse. A cet effet, on utilise deux dispositifs d'alimentation identiques à celui de la figure 1.

On comprend que la réalisation d'un dispositif d'alimentation haute tension selon le schéma de la figure 1 conduise à des problèmes d'isolation qui sont souvent résolus en écartant les uns des autres les conducteurs à potentiels très différents et en interposant entre eux un milieu isolant tel que de l'huile qui sert en même temps de refroidissement. On aboutit alors à des dispositifs de grandes dimensions qui sont encombrants.

Un but de la présente invention, est donc de réaliser un nouveau montage électrique et mécanique des différents éléments d'un dispositif d'alimentation haute tension pour tube à rayons X qui soit de faible encombrement et présente une grande facilité d'assemblage.

Par ailleurs, les tubes à rayons X sont de plus en plus utilisés en régime impulsionnel suivant des fréquences de répétition de plus en plus grandes. Dans le circuit de la figure 1, cela signifie que l'enroulement primaire est alimenté par une tension alternative de fréquence élevée, de l'ordre de plusieurs dizaines de kilohertz. Dans ces nouvelles conditions de fonctionnement, les performances du circuit de la figure 1 sont limitées par les capacités et selfs parasites des conducteurs et des enroulements du transformateur dont les valeurs sont difficiles à connaître et à compenser.

Un autre but de la présente invention est donc de réaliser un dispositif d'alimentation haute tension pour tube à rayons X dans lequel les positions relatives des différents éléments tendent à minimiser les capacités et selfs parasites et contribuent à diminuer l'encombrement de l'ensemble.

L'invention se rapporte à un dispositif d'alimentation haute tension d'un tube à rayons X comprenant un transformateur qui comporte au moins un enroulement primaire et une pluralité d'enroulements secondaires, les deux bornes de sortie de chacun desdits enroulements secondaires étant connectées à un circuit redresseur-doubleur de tension qui est constitué de deux diodes et de deux condensateurs de filtrage, lesdits circuits redresseur-doubleur étant connectés entre eux de manière que leurs tensions de sortie s'additionnent, caractérisé en ce que les enroulements primaire et secondaires du transformateur sont réalisés sur des bobines concentriques, en ce que les bornes de sortie desdits enroulements secondaires sont réparties sur chaque côté latéral desdites bobines, en ce que les condensateurs sont disposés sur la périphérie externe des bobines, et en ce que les diodes sont disposées sur un côté latéral desdites bobines.

Selon un mode de réalisation de l'invention, les condensateurs sont disposés dans une structure de forme annulaire qui entoure les bobines et qui sert de support auxdits condensateurs, bobines et diodes. Une telle disposition permet de réduire l'encombrement de l'ensemble ainsi que les longueurs des conducteurs de connexion entre les différents composants électriques.

De manière plus précise, la structure de forme annulaire peut être réalisée par deux demi-coquilles qui comportent chacune un premier compartiment pour loger et supporter les bobines des enroulements secondaires, un deuxième compartiment pour loger et supporter les condensateurs et un troisième compartiment pour loger et supporter, dans une demi-coquille, des diodes et leurs connexions aux condensateurs et aux bornes de sortie des enroulements secondaires, et dans une autre demi-coquille, les connexions des autres bornes de sortie des enroulements secondaires aux condensateurs.

La structure annulaire comporte une encoche à sa périphérie externe pour permettre la mise en place du circuit magnétique.

Des éléments mécaniques, tels que des tirants et des plaques, permettent le maintien entre elles des demi-coquilles associées à des couvercles latéraux et leur fixation par des pieds à une plaque de support. D'autres caractéristiques et avantages de la présente invention apparaîtront à la lecture de la description suivante d'un exemple particulier de réalisation, ladite description étant faite en relation avec les dessins joints dans lesquels :
- La figure 1 est un schéma électrique classique d'un dispositif d'alimentation haute tension pour tube à rayons X;
- la figure 2 est une vue en coupe éclatée d'une partie du dispositif d'alimentation selon l'invention suivant un axe longitudinal x′x passant par l'axe de symétrie des bobines circulaires des enroulements du transformateur;
- la figure 3 est une vue éclatée en perspective cavalière d'une partie des éléments constituant le dispositif d'alimentation selon l'invention,
- la figure 4 est une vue de dessus de l'élément sur lequel sont disposées et connectées électriquement les diodes du circuit de la figure 1,
- la figure 5 est une vue de dessus, en partie arrachée, montrant notamment les alvéoles de rangement des condensateurs de la figure 1,
- la figure 6 est une vue en coupe de l'ensemble du dispositif d'alimentation selon l'invention suivant l'axe x'x et passant par le circuit magnétique du transformateur, et
- la figure 7 est une vue en perspective, en partie arrachée, du dispositif d'alimentation selon l'invention tel qu'il est placé dans un compartiment rempli de liquide isolant.

La figure 1, qui est le schéma électrique d'un dispositif d'alimentation haute tension pour tube à rayons X, a été décrite partiellement dans le préambule. De manière plus précise, le transformateur comprend un enroulement primaire 12 et douze enroulements secondaires S1 à S12 dont on a représenté que les enroulements S1,S5,S6 et S12. De même, il comprend vingt-quatre diodes de redressement identiques D1 à D24 dont on a représenté que les éléments D1,D2,D3....D12,D13,D14.... D22,D23,D24.

Il comprend également vingt-quatre condensateurs de filtrage C1 à C24 dont on a représenté que les éléments C1,C2,C3....C12,C13,C14.....C23,C24.

Chaque enroulement secondaire S1 à S12 comporte deux bornes de sortie. L'ensemble des bornes de sortie portent les références B1 à B24, seules les bornes B1,B2,B3.....B5,B6,B7,B8......B23,B24 ayant été représentées.

Sur la figure 1, le point commun du condensateur C1 et de la diode D1 constitue la borne de sortie haute tension HT au travers d'une résistance R tandis que le point commun du condensateur C24 et de la diode D24 constitue la borne de sortie masse à laquelle est associé un éclateur 9.

Afin de limiter les longueurs des conducteurs de connexion qui relient les bornes de sortie B1 à B24 des enroulements secondaires S1 a S12, d'une part, aux diodes D1 à D24 et, d'autre part, aux condensateurs C1 à C24, il est prévu en premier lieu de réaliser des enroulements secondaires dont les bornes de sortie similaires de rang impair B1, B3....B23, sont disposées sur un premier côté latéral des enroulements tandis que les bornes de sortie de rang pair B2, B4....B24 sont disposées sur l'autre ou deuxième côté latéral des enroulements secondaires.

Il est prévu ensuite de grouper les diodes D1 à D24 sur un même support qui est disposé du côté des bornes de sortie B1, B3.....B23 des enroulements secondaires. Il est prévu également de disposer les condensateurs C1 à C 24 sur la périphérie externe des enroulements secondaires et d'effectuer leurs connexions, d'une part, aux diodes D1 à D24 sur le premier côté latéral des enroulements secondaires et, d'autre part, aux bornes de sortie B2, B4....B24 sur le deuxième côté latéral des enroulements secondaires.

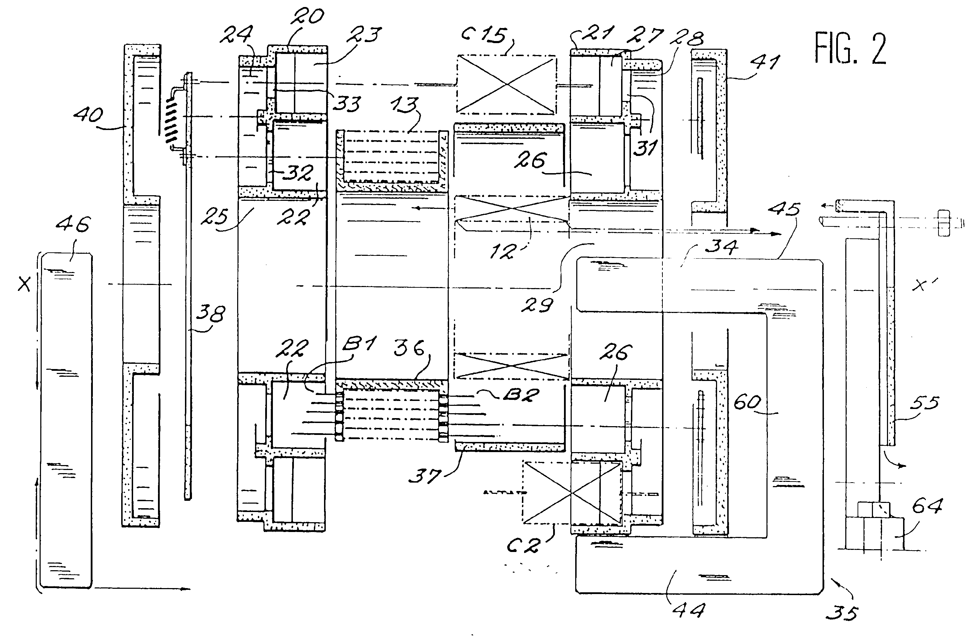

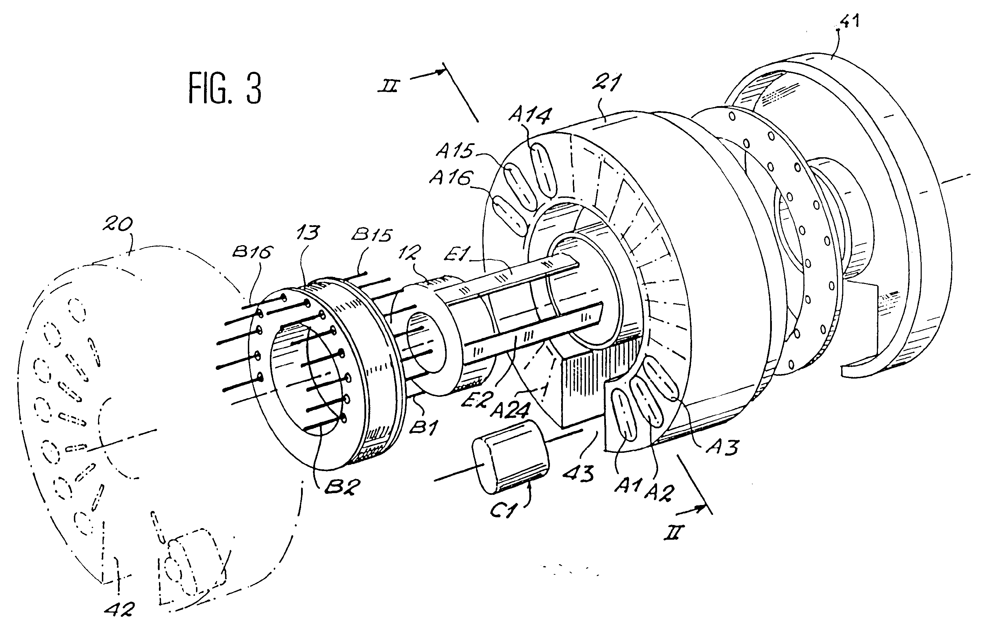

Cette disposition particulière des différents éléments selon ledit mode de réalisation de l'invention sera mieux comprise à l'aide de la description des figures 2 et 3 dans lesquelles les éléments identiques à ceux de la figure 1 portent les mêmes références.

Le dispositif comprend deux demi-coquilles 20 et 21 dans lesquelles sont prévus des logements pour placer l'enroulement primaire 12, les enroulements secondaires S1 à S12 les condensateurs C1 à C24 et les diodes D1 à D24. A cet effet, chaque demi-coquille 20 (ou 21) comporte trois compartiments annulaires 22, 23, et 24 (ou 26, 27, 28) autour d'une partie centrale cylindrique 25 (ou 29).

Le premier compartiment annulaire 22 (ou 26) est à la périphérie de la partie centrale 25 (ou 29) tandis que le deuxième compartiment annulaire 23 (ou 27) est à la périphérie externe du premier compartiment 22 (ou 26). Le troisième compartiment 24 (ou 29) est disposé latéralement par rapport aux deux premiers 22 et 23 (ou 26 et 27) et en est séparé par des cloisons 30 et 31 respectivement (ou 32 et 33) percées d'orifices.

Les parties centrales 25 et 29 sont prévues pour loger, notamment, l'enroulement primaire 12 et une branche 34 du circuit magnétique 35 du transformateur 10. Les premiers compartiments annulaires 22 et 26 sont prévus pour loger les enroulements secondaires 13 qui sont bobinés sur un mandrin 36 en couches superposées en commençant par l'enroulement S1. La périphérie externe du mandrin 36 est fermée par un couvercle constitué d'un anneau cylindrique 37. Le mandrin 36 et son couvercle 37 s'emboîtent dans les compartiments 22 et 26. Les deuxièmes compartiments annulaires 23 et 27 comportent vingt-quatre alvéoles A1,A2,A3.....A14, A15,A16.....A24 qui sont prévues pour loger respectivement les vingt-quatre condensateurs C1 à C24.

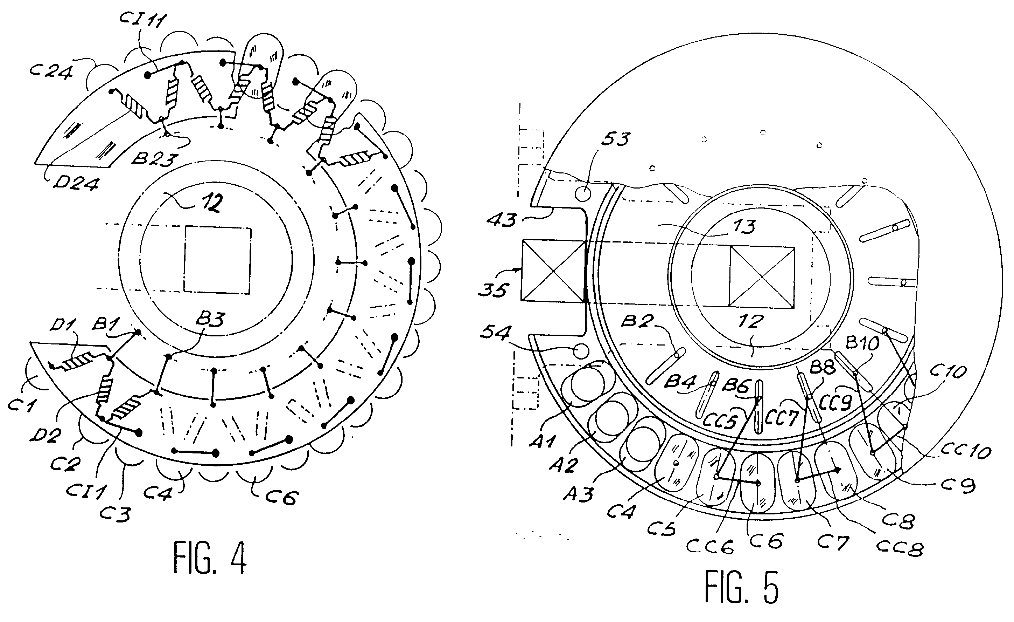

Le troisième compartiment 24 de la demi-coquille 20 est prévu pour loger les diodes D1 à D24 et effectuer leurs connexions entre elles, avec les condensateurs C1 à C24 et à certaines bornes de sortie des enroulements secondaires S1 à S12. Cette disposition sera décrite ci-après en relation avec la figure 4.

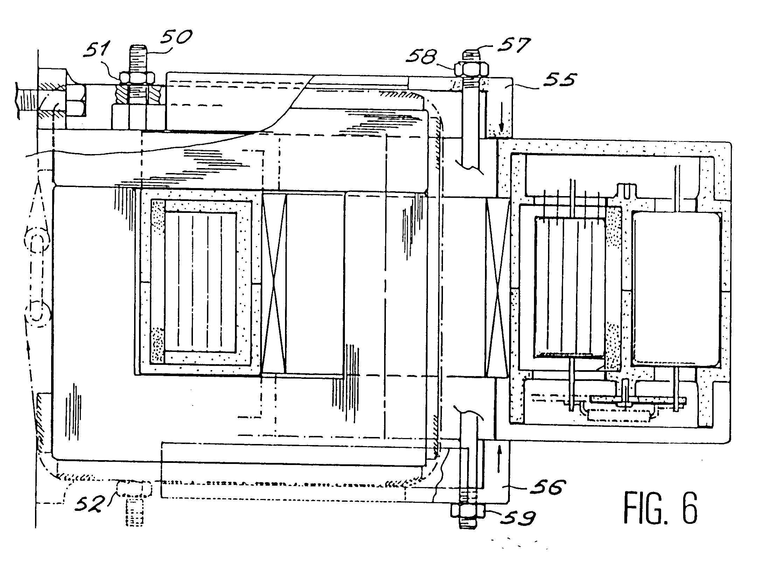

Le troisième compartiment 28 de la demi-coquille 21 est prévu pour effectuer les différentes connexions entre certaines bornes de sortie des enroulements secondaires S1 à S12 et les condensateurs C1 à C24 comme cela sera décrit ci-après en relation avec la figure 5.

Chaque compartiment annulaire 24 ou 28 est fermé respectivement par un couvercle annulaire 40 ou 41 qui vient s'emboîter sur le pourtour extérieur du compartiment associé.

Afin que le circuit magnétique 35 soit disposé à proximité des enroulements secondaires, chaque demi-coquille 20 (ou 21) a son pourtour interrompu par une encoche 42 (ou 43) et il en est de même de chaque couvercle 40 (ou 41). Une telle encoche permet le passage d'une branche dudit circuit magnétique.

Comme le montre la figure 4, les diodes D1 à D24 sont disposées sur un circuit imprimé en forme de secteur de plaquette annulaire qui réalise leurs connexions entre elles, avec une extrémité des condensateurs C1 à C24 et avec les bornes de sortie B1, B3.....B23 conformément au schéma électrique de la figure l. C'est ainsi que, à titre d'exemple, la diode D1 a sa cathode qui est connectée à la borne B1 de l'enroulement S1 et son anode qui est connectée à une des extrémités du condensateur C1. Par ailleurs, la borne B1 est connectée à l'anode de la diode D2 dont la cathode est connectée, d'une part, à l'anode de la diode D3 et, d'autre part, à une extrémité des condensateurs C2 et C3, et à ce dernier par un conducteur imprimé CI1. On remarquera que les autres conducteurs imprimés CI2 à CI11 connectent les autres points communs des diodes équivalentes à D2, D3 aux condensateurs équivalents à C3.

La figure 5 est une vue de dessus, couvercle 41 partiellement arrachée, de l'autre côté des enroulements secondaires. Sur cette figure, on a représenté que les conducteurs de connexion CC5 à CC10 entre les bornes B6,B8, et B10 et les condensateurs associés (C5, C6), (C7, C8) et (C9, C10). Bien entendu, ces conducteurs CC5 à CC10 peuvent être réalisés sous la forme de conducteurs d'un circuit imprimé analogue au circuit imprimé 38 portant les diodes ou sous la forme de barrettes.

Sur la figure 2 on a également représenté les quatre branches 34,46,44 et 60 du circuit magnétique 35 dont une disposée dans l'encoche 43.

Les différents éléments qui viennent d'être décrits en relation avec les figures 1 à 5 sont assemblés par emboîtement les uns dans les autres et maintenus les uns avec les autres par des éléments d'assemblage de manière à obtenir l'ensemble représenté en coupe partielle sur la figure 6. Les éléments d'assemblage, non représentés sur les figures 1 à 5, sont constitués par des tirants filetés et écrous et des plaquettes de support et de maintien des différentes branches du circuit magnétique 35.

C'est ainsi que les éléments de la figure 2 sont maintenus par deux tirants filetés et écrous tels que ceux référencés 50, 51 et 52 (figures 2 et 6), les tirants étant logés dans des trous 53 et 54 (figure 5) traversant les éléments de la figure 2 de part en part suivant un axe parallèle à l'axe de symétrie x′x.

Par ailleurs, pour supporter et maintenir le circuit magnétique 35, il est prévu des plaques 55 et 56 (figures 2, 5 et 6) ces plaques étant maintenues respectivement contre les couvercles 41 et 40 par des tirants filetés et écrous tels que ceux portant les références 57, 58 et 59 sur la figure 6. Ces plaques 55 et 56 sont prévues pour loger et maintenir chacune une branche du circuit magnétique. Ainsi, la plaque 55 supporte la branche 60 de la partie en U tandis que la plaque 56 supporte la branche 46 du circuit magnétique qui ferme l'ouverture du U.

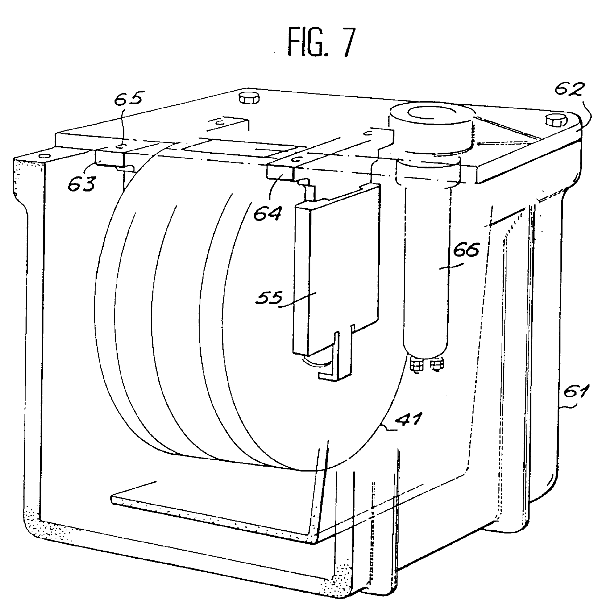

Le dispositif de la figure 6, qui constitue le circuit d'alimentation haute tension selon l'invention, est placé dans une enceinte 61 (figure 7) remplie de fluide de refroidissement isolant. A cet effet, il est monté sur une plaque de support 62 qui constitue le couvercle de l'enceinte 61. Le montage sur la plaque de support 62 s'effectue par l'intermédiaire de deux pieds 63 et 64 qui coopèrent avec les plaques de maintien 55 et 56 en s'emboîtement dans des logements (non représentés) prévus en leur intérieur. Ces pieds 55 et 56 sont percés de trous, tels que celui référence 65, pour le passage de vis (non représentés) qui viennent se visser dans un taraudage du couvercle 62.

Le couvercle 62 support également un plot isolant 66 qui supporte la borne de sortie haute tension du dispositif d'alimentation. Les autres bornes électriques du dispositif d'alimentation n'ont pas été représentées sur cette figure 7.

La description qui vient d'être faite du dispositif d'alimentation selon l'invention montre comment ont été atteints les but indiqués dans le préambule, savoir un faible encombrement, une faible valeur des éléments électriques parasites et une facilité de réalisation et de montage.

C'est ainsi que le faible encombrement a été essentiellement obtenu par un groupement des condensateurs à la périphérie du mandrin des enroulements secondaires. Les valeurs des éléments parasites ont été réduites au minimum par des connexions de faible longueur entre les bornes de sortie des enroulements secondaires et les diodes et condensateurs, notamment en groupant les diodes sur une plaquette circulaire disposée à proximité des bornes de sortie desdits enroulements. Enfin, la facilité de réalisation de montage a été obtenue bar des éléments tels que les demi-coquilles, couvercles et mandrin qui s'emboîtent les uns dans les autres et qui sont fabriqués par moulage en matière plastique diélectrique.

L'invention a été décrite dans un mode de réalisation dans lequel les enroulements primaire et secondaires sont circulaires et concentriques mais il est clair qu'elle s'applique au cas où ces enroulements ne sont pas circulaires et sont par exemple de forme carré ou rectangulaire.

Il est à remarquer que la disposition des enroulements en couches concentriques superposées permet de diminuer la valeur de la capacité d'entrée du secondaire ramenée au primaire car, pratiquement, seule la capacité par rapport a la masse du premier enroulement S1 intervient, les capacités des autres enroulements n'intervenant pas car ces derniers sont à des potentiels alternatifs. Le montage selon l'invention permet de diminuer aussi la capacité par rapport à la masse du premier enroulement S1.

## Revendications

1. Dispositif d'alimentation haute tension pour tube à rayons X comprenant un transformateur qui comporte au moins un enroulement primaire (12) et une pluralité d'enroulements secondaires (S1 à S12), les deux bornes de sortie (B1 à B24) de chacun desdits enroulements secondaires étant connectées à un circuit redresseur-doubleur de tension qui est constitué de deux diodes (D1 à D24) et de deux condensateurs de filtrage (C1 à C24), lesdits circuits redresseur-doubleur étant connectés entre eux de manière que leurs tensions de sortie s'additionnent,
caractérisé en ce que les enroulements primaire (12) et secondaires (S1 à S12) du transformateur sont réalisés sur des bobines concentriques, en ce que les bornes de sortie (B1 à B24) desdits enroulements secondaires sont réparties sur chaque côté latéral desdites bobines concentriques, en ce que les condensateurs (C1 à C24) sont disposés sur la périphérie externe des bobines concentriques, et en ce que les diodes sont disposées sur un côté latéral desdites bobines concentriques.

2. Dispositif d'alimentation selon la revendication 1, caractérisé en ce que les condensateurs (C1 à C24) sont disposés dans une structure diélectrique isolante (20,21,40,41) de forme cylindrique annulaire qui entoure les bobines concentriques du transformateur et sert de support auxdits condensateurs, bobines concentriques et diodes.

3. Dispositif d'alimentation selon la revendication 2, caractérisé en ce que la structure de forme cylindrique annulaire est constituée de deux demi-coquilles (20,21) qui comportent chacune un premier compartiment (22,26) pour loger et supporter les bobines concentriques des enroulements secondaires (S1 à S12), un deuxième compartiment (23,27) pour loger et supporter les condensateurs (C1 à C24) et un troisième compartiment (24,28) pour loger et supporter l'un (20) les diodes (D1 à D24) et leurs connexions avec les condensateurs (C1 à C24) et certaines des bornes de sortie des enroulements secondaires, et l'autre (21) les connexions des autres bornes de sortie des enroulements secondaires aux condensateurs (C1 à C24).

4. Dispositif d'alimentation selon la revendication 3, caractérisé en ce que chaque demi-coquille (20,21) comporte une encoche (43) sur sa périphérie externe de manière à permettre le logement d'une branche du circuit magnétique (35) du transformateur, les autres branches dudit circuit étant disposées l'une à l'intérieur de la partie centrale (25,29) des demi-coquilles et les deux autres sur les côtés latéraux des bobines concentriques.

5. Dispositif d'alimentation selon la revendication 3 caractérisé en ce que les demi-coquilles (20,21) sont fixées l'une à l'autre par l'intermédiaire de deux couvercles annulaires (40,41) qui ferment chacun le côté latéral extérieur de chaque demi-coquille et qui coopèrent avec des tirants de serrage.

6. Dispositif d'alimentation selon la revendication 4, caractérisé en ce que les branches du circuit magnétique (35) sont maintenues l'une par rapport à l'autre et par rapport aux bobines concentriques par l'intermédiaire de deux plaques latérales (55) qui coopèrent avec les couvercles (40,41) et des tirants de maintien.

7. Dispositif d'alimentation selon la revendication 6, caractérisé en ce que les deux plaques latérales (55) coopèrent avec des pieds (63,64) qui servent de support de l'ensemble en vue de le fixer sur une plaque (62).

8. Dispositif d'alimentation selon la revendication 6 ou 7 caractérisé en ce que l'ensemble est disposé dans une enceinte (61) remplie d'un fluide de refroidissement isolant.

9. Dispositif d'alimentation selon l'une quelconque des revendications précédentes 1 à 8, caractérisé en ce que les enroulements sont cylindriques, ou circulaires, ou rectangulaires.

10. Dispositif d'alimentation selon l'une quelconque des revendications précédentes 1 à 9, caractérisé en ce que les enroulements sont superposés l'un à l'autre.

## Patentansprüche

1. Hochspannungsversorgungsvorrichtung für eine Röntgenröhre, aufweisend einen Transformator, der wenigstens eine Primärwicklung (12) und eine Anzahl von Sekundärwicklungen (S1 bis S12) umfaßt, wobei zwei Ausgangsanschlüsse (B1 bis B24) jeder der Sekundärwicklungen mit einem Spannungsgleichrichter-Dopplerkreis verbunden sind, der aus zwei Dioden (D1 bis D24) und zwei Glättungskondensatoren (C1 bis C24) besteht, wobei die Gleichrichter-Dopplerkreise miteinander derart verbunden sind, daß sich ihre Ausgangsspannungen addieren,
dadurch **gekennzeichnet,** daß die Primärwicklung (12) und die Sekundärwicklungen (S1 bis S12) des Transformators auf konzentrischen Spulen ausgeführt sind, daß die Ausgangsanschlüsse (B1 bis B24) der Sekundärwicklungen auf jeder auf der Seite befindlichen Seite der konzentrischen Spulen verteilt sind, daß die Kondensatoren (C1 bis C24) auf dem Außenumfang der konzentrischen Spulen angeordnet sind und daß die Dioden auf einer auf der Seite befindlichen Seite der konzentrischen Spulen angeordnet sind.

2. Versorgungsvorrichtung nach Anspruch 1, dadurch **ge****kennzeichnet,** daß die Kondensatoren (C1 bis C24) auf einer dielektrischen Isolieranordnung (20, 21, 40, 41) mit Ringzylinderform angeordnet sind, die die konzentrischen Spulen des Transformators umgibt und für die Kondensatoren, konzentrischen Spulen und Dioden als Abstützung dient.

3. Versorgungsvorrichtung nach Anspruch 2, dadurch **ge****kennzeichnet,** daß die Anordnung mit Zylinderringform aus zwei Halbschalen (20, 21) besteht, die jeweils einen ersten Raum (22, 26) zur Aufnahme und Abstützung der konzentrischen Spulen der Sekundärwicklungen (S1 bis S12), einen zweiten Raum (23, 27) zur Aufnahme und Abstützung der Kondensatoren (C1 bis C24) und einen dritten Raum (24, 28) zur Aufnahme und Abstützung, die eine (20), der Dioden (D1 bis D24) und ihrer Verbindungen mit den Kondensatoren (C1 bis C24) und bestimmter der Ausgangsanschlüsse der Sekundärwicklungen, und die andere (21), der Verbindungen der anderen Ausgangsanschlüsse der Sekundärwicklungen mit den Kondensatoren (C1 bis C24), umfaßt.

4. Versorgungsvorrichtung nach Anspruch 3, dadurch **ge****kennzeichnet,** daß jede Halbschale (20, 21) auf ihrem Außenumfang eine Aussparung (43) umfaßt derart, daß die Aufnahme eines Zweiges des Magnetkreises (35) des Transormators gestattet wird, wobei die anderen Zweige des Kreises der eine im Inneren des Zentralteils (25, 29) der Halbschalen und die beiden anderen auf den auf der Seite befindlichen Seiten der konzentrischen Spulen angeordnet sind.

5. Versorgungsvorrichtung nach Anspruch 3, dadurch **ge****kennzeichnet,** daß die Halbschalen (20, 21) aneinander mittels zweier ringförmiger Abdeckungen (40, 41) befestigt sind, die jeweils die auf der Seite befindliche Außenseite jeder Halbschale verschließen und die mit Klemmzugeinrichtungen zusammenwirken.

6. Versorgungsvorrichtung nach Anspruch 4, dadurch **ge****kennzeichnet,** daß die Zweige des Magnetkreises (35) in bezug aufeinander und in bezug auf die konzentrischen Spulen mittels zweier Seitenplatten (55) gehalten sind, die mit den Abdeckungen (40, 41) und Haltezugeinrichtungen zusammenwirken.

7. Versorgungsvorrichtung nach Anspruch 6, dadurch **ge****kennzeichnet,** daß die beiden Seitenplatten (55) mit Füßen (63, 64) zusammenwirken, die als Abstützung für den Aufbau im Hinblick auf die Befestigung auf einer Platte (62) dienen.

8. Versorgungsvorrichtung nach Anspruch 6 oder 7, dadurch **gekennzeichnet,** daß der Aufbau in einem mit einem Isolierkühlfluid gefüllten Raum (61) angeordnet ist.

9. Versorgungsvorrichtung nach einem beliebigen der vorhergehenden Ansprüche 1 bis 8, dadurch **gekennzeich****net,** daß die Wicklungen zylindrisch oder kreisförmig oder rechteckförmig sind.

10. Versorgungsvorrichtung nach einem beliebigen der vorhergehenden Ansprüche 1 bis 9, dadurch **gekenn****zeichnet,** daß die Wicklungen, eine zur anderen, übereinander angeordnet sind.

## Claims

1. High voltage supply device for an X-ray tube, comprising a transformer which has at least one primary winding (12) and a plurality of secondary windings (S1 to S12), the two output terminals (B1 to B24) of each of the said secondary windings being connected to a voltage doubler-rectifier circuit which is formed by two diodes (D1 to D24) and two filter capacitors (C1 to C24), the said doubler-rectifier circuits being connected together so that their output voltages add up,
characterised in that the primary winding (12) and the secondary windings (S1 to S12) of the transformer are produced on concentric coils, in that the output terminals (B1 to B24) of the said secondary windings are distributed over each lateral side of the said concentric coils, in that the capacitors (C1 to C24) are arranged on the outer periphery of the concentric coils, and in that the diodes are arranged on a lateral side of the said concentric coils.

2. Supply device according to claim 1, characterised in that the capacitors (C1 to C24) are arranged in an insulating dielectric structure (20, 21, 40, 41) having an annular cylindrical shape which surrounds the concentric coils of the transformer and serves as a support for the said capacitors, concentric coils and diodes.

3. Supply device according to claim 2, characterised in that the structure having an annular cylindrical shape is formed by two casing halves (20, 21) which each comprise a first compartment (22, 26) for housing and supporting the concentric coils of the secondary windings (S1 to S12), a second compartment (23, 27) for housing and supporting the capacitors (C1 to C24) and a third compartment (24, 28) for housing and supporting, in the case of one casing half (20), the diodes (D1 to D24) and their connections to the capacitors (C1 to C24) and some of the output terminals of the secondary windings, and in the case of the other casing half (21), the connections of the other output terminals of the secondary windings to the capacitors (C1 to C24).

4. Supply device according to claim 3, characterised in that each casing half (20, 21) comprises a recess (43) on its outer periphery so as to enable an arm of the magnetic circuit (35) of the transformer to be accommodated, the other arms of the said circuit being arranged one inside the central part (25, 29) of the casing halves and the other two on the lateral sides of the concentric coils.

5. Supply device according to claim 3, characterised in that the casing halves (20, 21) are attached together by means of two annular covers (40, 41), each of which closes the outer lateral side of each casing half, and which cooperate with clamping rods.

6. Supply device according to claim 4, characterised in that the arms of the magnetic circuit (35) are maintained relative to each other and relative to the concentric coils by means of two side plates (55) which cooperate with the covers (40, 41) and with locking rods.

7. Supply device according to claim 6, characterised in that the two side plates (55) cooperate with feet (63, 64) which serve as a support for the assembly for the purpose of securing it to a plate (62).

8. Supply device according to claim 6 or 7, characterised in that the assembly is arranged within an enclosure (61) filled with a insulating cooling fluid.

9. Supply device according to any one of the preceding claims 1 to 8, characterised in that the windings are cylindrical or circular or rectangular.

10. Supply device according to any one of the preceding claims 1 to 9, characterised in that the windings are superposed on each other.
